# EUROPEAN PATENT SPECIFICATION

(11) **EP 2 041 474 B1**
(45) Date of publication and mention of the grant of the patent: **12.09.2012**
(21) Application number: 07730614.0
(22) Date of filing: 29.05.2007
(51) Int. Cl.: F16P 1/02, D21G 5/00

(54) **PROTECTIVE CASING**
SCHUTZGEHÄUSE
BOÎTIER DE PROTECTION

(30) Priority: 31.05.2006 FI 20060530
(43) Date of publication of application: 01.04.2009
(73) Proprietor: AP Industry Engineering Service Oy, 33200 Tampere (FI)
(72) Inventor: KAUPPINEN, Mikko, FI-55300 Rauha (FI)
(74) Representative: Helino, Timo Kalervo
(86) International application number: PCT/FI2007/000145
(87) International publication number: WO 2007/138153

(56) References cited:
- WO-A1-02/35140
- FI-C- 98 953
- GB-A- 187 295
- GB-A- 191 014 088
- US-B1- 6 241 618

## Description

### FIELD OF THE INVENTION

The invention relates to a protective casing as defined in the preamble of claim 1 for protecting a rotating machine component from accidental contacts.

### BACKGROUND OF THE INVENTION

In particular, paper and pulp machines and different processes of the chemical industry include a large number of different rotating machines and machine components, shafts and couplers, which must be protected such that they would not accidentally come into contact with anything as they rotate. As is known, the rotating shafts are protected using two equally large gutter-like jackets which form together a cylindrical protective jacket around the shaft. The groove-like jackets are joined together at the edges and supported at the ends on the devices which are connected by the protected shaft.

The protective jacket must be removed from each machine for maintenance, cleaning, lubrication and shaft alignment 1-10 times per year. Uncoupling the gutters from each other and from the support constructions is slow and difficult and generally takes several hours. Furthermore, there may be tens of liters of lubricant, leaked from the shaft, on the bottom of the gutter, which must be removed. It is also worth noting that it is not sufficient to merely uncouple the upper gutter, because the lower gutter, if left in place, hinders the shaft alignment and also impedes the removal of the leaked lubricant. As one paper machine may comprise for example 40-50 such shafts or other similar objects requiring continual maintenance, it is understandable that such maintenance takes more time than is reasonable, requires long stoppages or, correspondingly, several maintenance men if the stoppages are kept short, and is costly.

A prior art document of U86241618 comprises a shaft guard including a base, a first guard half and a second guard half. Bottoms of the halves are retained by the base such that they contact each other to fully cover a shaft.

### OBJECTIVE OF THE INVENTION

The objective of the invention is to eliminate the drawbacks referred to above.

One specific objective of the invention is to disclose a novel protective casing, which enables a safe protection of different shafts and similar machine components in accordance with the regulations, and at the same time a fast and easy performance of all necessary maintenance measures.

### SUMMARY OF THE INVENTION

The protective casing in accordance with the invention is characterized by what has been presented in claim 7.

The protective casing in accordance with the invention is intended for protecting a rotating machine component, such as a shaft, from accidental contacts. The protective casing comprises a bottom part, positioned under the machine component, and a cover jacket, which two can be joined at their side edges positioned in the direction of the rotation axis of the machine component to form a protective casing which envelops the machine component. The cover jacket comprises a first cover part, which is pivotally connected at its first side edge to a first side edge of the bottom part, and a second cover part, which is pivotally connected at its first side edge to a second side edge of the bottom part. In this way, the cover parts can be bent at their first side edges around the protected machine component and locked together at their second side edges on top of the protective casing, i.e, over the protected machine component. The side edges of the bottom part in the direction of the rotation axis of the protected machine component are positioned below the horizontal plane defined by the rotation axis of the protected machine component, such that, in the opened position of the protective casing, i.e. when the cover parts are bent open, the entire protected machine component becomes well exposed for different maintenance measures. According to the invention, the cover part comprises an edge flange, corresponding by shape to the board of the bottom part, such that they can be bent tightly against each other by outwardly bending the cover part below the bottom part into a position suspending from the side edge thereof. Preferably, the board and the edge flange are straight plane surfaces, the planes being pressed against each other. Depending on the angles used between different parts, the cover parts may be bent directly downwards or diagonally downwards in a suitable manner. Furthermore, as the bottom part, or at least the edge areas thereof, is arranged, in accordance with the invention, to correspond by its shape to the lower edges of the cover parts, such that the cover parts can be opened and outwardly bent partly against the outer surface of the bottom part to form a rigid assembly, the protective casing in accordance with the invention forms, when opened, a very firm and safe support for different maintenance measures.

In one embodiment of the invention, the side edges of the bottom part are positioned below the entire protected machine component, i.e. lower than the horizontal plane defined by the lowest point of said machine component.

Preferably, the bottom part comprises a bottom plate and boards which extend diagonally upwards and outwards such that the bottom part forms a gutter-like trough, into which the lubricant, leaking from the rotating machine component, is able to run and build up. However, the bottom part is flat enough so that it does substantially not surround the protected machine component, but is instead merely positioned under it, therefore not blocking the access to the machine component during different maintenance measures. Preferably, the side edges of the bottom part are positioned on the same horizontal plane, i.e. the slightly gutter-like bottom part is symmetrical in the transverse direction thereof.

The second side edges, i.e. the upper side edges, of the cover parts may comprise connecting flanges, at which they can be joined together. It is also possible to use a suitable locking, by means of which they can be locked together.

In one embodiment of the invention, the side edges or the areas near their downward-bent, opened positions comprise a latch or a similar locking, by means of which the side edges can be locked in the opened position under the bottom part. In the downward-bent and, in particular, locked position, the board of the bottom part and the edge flange of the cover part together stiffen the construction to form a very supporting working surface, which even allows the removal of the maintained machine component, such as the shaft, and the placement thereof on the working surface for the duration of maintenance or the shaft replacement.

The materials and material thicknesses used in the protective casing are not described in detail in this context; it is obvious to a person skilled in the art that the material strength of the plate used is always case-specifically selected according to the dimensions, the required bearing capacity, and the operating conditions of the protective casings. Similarly, the plate material can be case-specifically selected, although steel plate is used most typically.

The protective casing in accordance with the invention provides considerable advantages compared to the prior art. The most significant advantage of the invention is the saving of time and, therefore, the saving of expenses. The several hours' work for removing the protective casings in accordance with the prior art is hereby turned into the simple opening of the casing which lasts only a couple of minutes. An equal amount of time is also saved at the end when the casing is closed. Furthermore, the protective casing in accordance with the invention forms an excellent working surface for maintenance measures, which speeds up and facilitates the entire maintenance process even more. The protective casing, when opened, actually forms a firm base, which, if required, is capable of bearing the weight of the maintained shaft, or even the weight of the maintenance man. Furthermore, the bottom part of the protective casing in accordance with the invention forms a flat gutter, positioned at a sufficient distance from the protected machine component even when left in place, which is easy and simple to clear of the leaked lubricant just by wiping it off for example with a squeegee.

### LIST OF FIGURES

In the following, the invention will be described in detail by means of examples with reference to the accompanying drawing, in which
Fig. 1 schematically represents a cross-sectional view of a first protective casing in accordance with the invention as seen from one end and in opened and closed positions,
Fig. 2 correspondingly represents a second embodiment of the invention, and
Fig. 3 correspondingly represents a third embodiment of the invention.

### DETAILED DESCRIPTION OF THE INVENTION

The figures show cross-sectional views of three protective casings in accordance with the invention. The lengths of the protective casings correspond to the lengths of the protected machine components, i.e. shafts 1, such that they are completely covered by the protective casings between the devices, such as a motor and a pump, that they link together. The protective casings, i.e. their bottom parts 2,3,4, may be supported on and coupled to the devices connected by the shaft 1 or even the floor beneath in a manner known per se. These obvious constructions known per se are not described in the following in any detail.

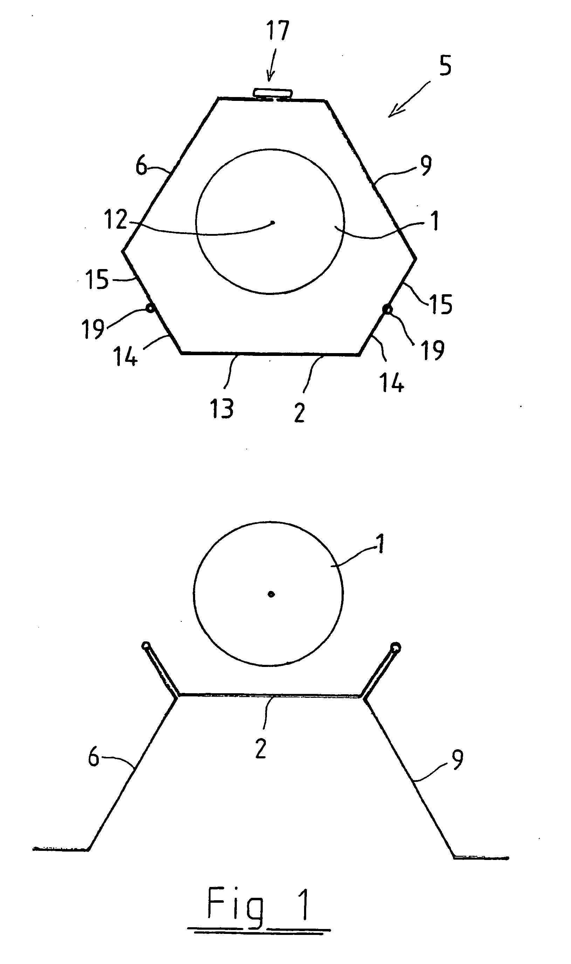

In the embodiment of Fig. 1, the protective casing comprises a gutter-like bottom part 2 which has a horizontal and planar bottom plate 13 and boards 14 which extend diagonally upwards and outwards from the edges of the bottom plate at an angle of 120°. The first side edge of the bottom part, i.e. the upper part of the board 14, comprises a joint 19, such as a hinge, by means of which a first cover part 6, substantially having a profile corresponding to that of the bottom part 2, is coupled to the first edge of the bottom part at an edge flange 15 corresponding to the board 14. Correspondingly, a second cover part 9, corresponding to the first cover part 6, is supported on the second side edge of the bottom part by means of another joint 19.

In accordance with the upper figure, the bottom part 2 and the cover parts 6 and 9, when placed around the protected machine component 1 to form a circular construction, form a cylindrical protective casing of hexagonal shape with the internal angles of 120° each. The upper part of the casing, i.e. the area near the second side edges of the cover parts 6 and 9, comprises a locking 17, such as a suitable latch, by means of which the casing can be locked and correspondingly opened when necessary.

When the machine component 1, such as the shaft, is maintained, such as for example checked, lubricated, and aligned, and when the leaked lubricant is removed, the locking 17 will be opened, and the first cover part 6 and the second cover part 9 bent outwards and downwards in accordance with the lower figure. The straight and planar edge flanges 15 of the cover parts 6 and 9 are thus bent about the joints 19 for 180° such that they become supported against the corresponding boards 14 of the bottom part. As the cover parts bend down by their own weight, the boards 14 and side flanges 15 together form a construction which also stiffens the bottom plate 13 of the bottom part 2. The rigidity of the construction can further be increased and ensured by locking the down-bent cover parts either together from below or each of them separately to some fixed construction. In this way, the maintained machine component 1 becomes in no time well exposed for different maintenance measures just by bending down the cover parts 6 and 9 of the protective casing. Furthermore, the rigid protective casing, when opened below, forms an excellent surface for different working and maintenance measures. It even bears the weight of the machine component 1, when required. Furthermore, the topmost parts of the bottom part 2, i.e. the areas near the joints 19, are, in the opened position, clearly below the horizontal plane defined by the rotation axis 12 of the machine component, such as the shaft 1. Therefore, the casing, when opened, does not impede in any way the alignment of the shaft. Being flat, the bottom part 2 is also open enough and easily managed so that the lubricant, built in the gutter-like bottom part 2, can be easily removed just by manually wiping it with a suitable squeegee to one end of the gutter and further over the edge into a container.

Similarly to its opening, the protective casing can be closed just by bending the cover parts 6 and 9 up against each other and locking them. In this way, the entire maintenance measure of the machine component 1, which takes several hours with protective casings of the prior art, can be carried out in about 5 minutes.

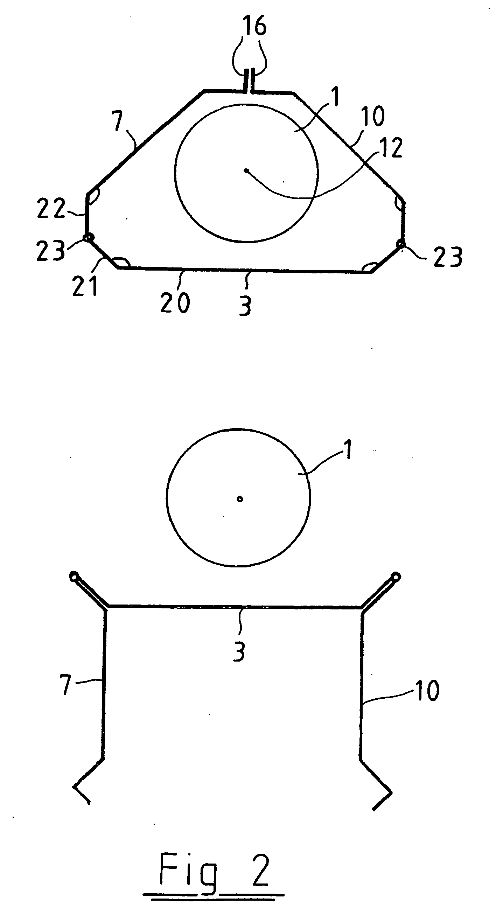

Fig. 2 shows a second embodiment of the protective casing in accordance with the invention. The operation of the protective casing is in itself identical to the operation of the embodiment of Fig. 1, and is not described herein anew. Constructional differences are found in the angles between the bottom part 3 and the side parts 7 and 10. The angle between the bottom plate 20 and the board 21 of the bottom part 3 is 135°. Similarly, the edge flange 22 is at an angle of 135° with respect to the rest of the cover part 7. Therefore, also the angle between the board 21 and the edge flange 22 is 135° when the protective casing is in the closed position. When the protective casing is opened, both cover parts 7 and 10 bend for 225° about the joints 23, such that they will point perpendicularly downwards, in accordance with the lower figure, the board 21 and the edge flange 22 becoming tightly pressed against each other, thereby stiffening the construction. The cover parts 7 and 10 are thus positioned clearly under the bottom part 3 and provide the maintenance man with more space to stand right by the maintained object. Also in this embodiment, it is advantageous to the rigidity of the construction if the down-bent cover parts 7 and 10 are locked in place.

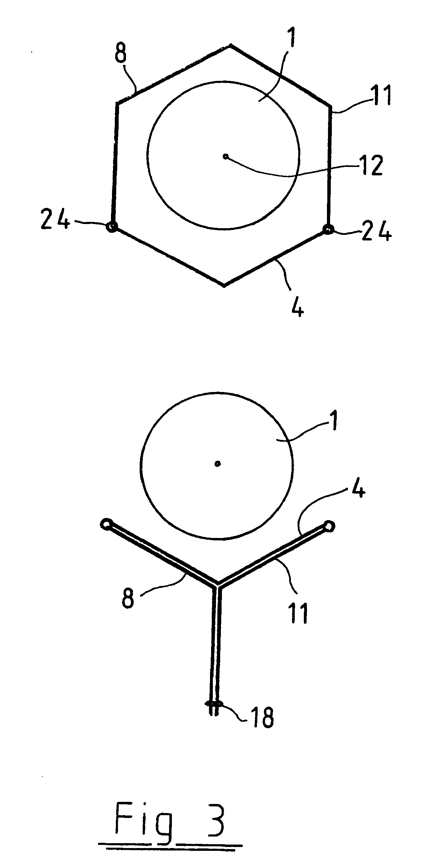

Fig. 3 shows a third embodiment of the protective casing in accordance with the invention. The operation of the protective casing is in itself identical to the operation of the embodiment of Fig. 1, and is not described herein anew. The difference is found in the shape of the bottom part 4 and the cover parts 8 and 11. All three parts are comprised of two planar plates, which are positioned at an angle of 120° with respect to each other. Similarly, by the joints 24 between the bottom part 4 and the cover parts 8 and 11, the angle between the bottom part and the cover part is 120°, and, further, on top of the protective casing, the angle at the juncture of the cover parts is 120°. The protective casing in the closed position is thus shaped, in cross-section, as an equilateral hexagon. When opening the casing, the cover parts 8 and 11 are bent about the joints 24 for 240°, such that they become tightly pressed against each other and the bottom part 4, in accordance with the lower figure, forming a rigid, three-pointed double-jacket construction, which is locked at the bottom edge of the cover parts by means of a locking 18. It is also possible that the locking 18 is so arranged right at the edge that the cover parts can also be locked in the closed position around the machine component 1 by means of the same locking. In this case, a separate locking, such as the locking 17 shown in Fig. 1, is of course not required.

The invention is not limited merely to the examples referred to above; instead many variations are possible within the scope of the inventive idea defined by the claims.

## Claims

1. Protective casing for protecting a rotating machine component (1), such as a shaft, from accidental contacts, which protective casing comprises a bottom part (2,3,4), positioned in use under the machine component, and a cover jacket (5), which two can be joined together at their side edges, positioned in use in the direction of the rotation axis of the machine component, to form a protective casing enveloping the machine component, the cover jacket (5) comprising a first cover part (6,7,8) which is pivotally connected at its first side edge to the first side edge of the bottom part, and a second cover part (9,10,11) which is pivotally connected at its first side edge to the second side edge of the bottom part, such that the cover parts can be bent around the machine component (1) and locked together at their second side edges, and the cover parts can be opened and outwardly bent partly against the outer surface of the bottom part, to form a rigid assembly **characterized in that** the bottom part comprises a bottom plate (13) and boards (14) which extend diagonally upwards and outwards, and
**in that** the cover part comprises an edge flange (15), corresponding by shape to the board (14) of the bottom part, such that they can be bent tightly against each other by outwardly bending the cover part below the bottom part into a position suspending from the side edge thereof

2. Protective casing in accordance with claim 1 **characterized in that** the second side edges of the cover parts comprise connecting flanges (16), at which they can be joined together.

3. Protective casing in accordance with any one of claims 1-2 **characterized in that** the second side edges of the cover parts comprise a locking (17), by means of which they can be locked together.

4. Protective casing in accordance with any one of claims 1-3 **characterized in that** the side edges comprise a latch or a similar locking (18), by means of which they can be locked into the opened position under the bottom part.

5. Protective casing in accordance with any one of claims 1-4 **characterized in that** the bottom part (4) and the cover parts (8,11) are identical plates in which an angle of 120° divides the plate in two equal parts, such that the protective casing is formed as an equilateral hexagon.

## Patentansprüche

1. Schutzgehäuse zum Abschirmen eines rotierenden Maschinenteils (1), wie beispielsweise eine Welle, vor unbeabsichtigten Kontakten, wobei das Schutzgehäuse ein bei Gebrauch unter dem Maschinenteil angeordnetes Unterteil (2, 3, 4) und einen Schutzmantel (5) aufweist, die beide an ihren Seitenkanten miteinander verbunden werden können, der bei Gebrauch in Richtung der Rotationsachse des Maschinenteils angeordnet ist, um ein das Maschinenteil umgebende Schutzgehäuse zu bilden, der Schutzmantel (5) einen ersten Mantelteil (6, 7, 8) umfasst, der an seiner ersten Seitenkante drehbar mit der ersten Seitenkante des Unterteils verbunden ist, und einen zweiten Mantelteil (9, 10, 11), der an seiner ersten Seitenkante mit der zweiten Seitenkante des Unterteils drehbar verbunden ist, so dass die Mantelteile um das Maschinenteil (1) herum gebogen und an ihren zweiten Seitenkanten arretiert werden können, und die Mantelteile geöffnet und nach außen, teilweise gegen die äußere Fläche des Unterteils gebogen werden können, um eine formfeste Anordnung zu bilden,
**dadurch gekennzeichnet, dass** das Unterteil eine Bodenplatte (13) und Platten (14), die sich diagonal nach oben und nach außen erstrecken, aufweist; und
dadurch, dass der Mantelteil eine Bördel (15) aufweist, die in der Form der Platte des Unterteils (14) entspricht, so dass sie fest gegeneinander gebogen werden können, indem der Mantelteil unterhalb des Unterteils in eine Position nach außen gebogen wird, die von dessen Seitenkante herunterhängt.

2. Schutzgehäuse nach Anspruch 1, **dadurch gekennzeichnet, dass** die zweiten Seitenkanten der Mantelteile Verbindungsflansche (16) aufweisen, an denen sie miteinander verbunden werden können.

3. Schutzgehäuse nach einem der Ansprüche 1 bis 2, **dadurch gekennzeichnet, dass** die zweiten Seitenkanten der Mantelteile eine Verriegelung (17) aufweisen, mittels der sie miteinander arretiert werden können.

4. Schutzgehäuse nach einem der Ansprüche 1 bis 3, **dadurch gekennzeichnet, dass** die Seitenkanten eine Sperre oder eine ähnliche Verriegelung (18) aufweisen, mittels der sie in die geöffnete Stellung unterhalb des Unterteils arretiert werden können.

5. Schutzgehäuse nach einem der Ansprüche 1 bis 4, **dadurch gekennzeichnet, dass** das Unterteil (4) und die Mantelteile (8, 11) genau gleiche Platten sind, bei denen ein Winkel von 120° die Platte in zwei gleiche Teile teilt, so dass das Schutzgehäuse wie ein gleichseitiges Sechseck ausgebildet ist.

## Revendications

1. Carter de protection pour protéger un composant rotatif de machine (1), tel qu'un arbre, de contacts accidentels, lequel carter de protection comprend une partie inférieure (2, 3, 4), positionnée durant l'utilisation, sous le composant de machine, et une chemise couvercle (5), ces deux parties pouvant être jointes ensemble au niveau de leurs bords latéraux, positionnés, durant l'utilisation, dans la direction de l'axe de rotation du composant de machine, pour former un carter de protection enveloppant le composant de machine, la chemise couvercle (5) comprenant une première partie couvercle (6, 7, 8) qui est reliée de façon pivotante, au niveau de son premier bord latéral, au premier bord latéral de la partie inférieure, et une seconde partie couvercle (9, 10, 11) qui est reliée de façon pivotante, au niveau de son premier bord latéral, au second bord latéral de la partie inférieure, de sorte que les parties couvercles puissent être pliées autour du composant de machine (1) et verrouillées ensemble au niveau de leurs seconds bords latéraux, et les parties couvercles peuvent être ouvertes et pliées vers l'extérieur partiellement contre la surface extérieure de la partie inférieure, pour former un ensemble rigide, **caractérisé en ce que** la partie inférieure comprend une plaque inférieure (13) et des panneaux (14) qui s'étendent diagonalement vers le haut et vers l'extérieur, et **en ce que** la partie couvercle comprend une bride de bord (15) dont la forme correspond au panneau (14) de la partie inférieure, de sorte qu'ils puissent être pliés de façon serrée l'un contre l'autre en pliant vers l'extérieur la partie couvercle en dessous de la partie inférieure dans une position suspendue à partir de son bord latéral.

2. Carter de protection selon la revendication 1, **caractérisé en ce que** les seconds bords latéraux des parties couvercles comprennent des brides de liaison (16), au niveau desquelles ils peuvent être joints ensemble.

3. Carter de protection selon une quelconque des revendications 1 et 2, **caractérisé en ce que** les seconds bords latéraux des parties couvercles comprennent un verrouillage (17), au moyen duquel ils peuvent être verrouillés ensemble.

4. Carter de protection selon une quelconque des revendications 1 à 3, **caractérisé en ce que** les bords latéraux comprennent une attache ou un verrouillage similaire (18), au moyen duquel ils peuvent être verrouillés dans la position ouverte sous la partie inférieure.

5. Carter de protection selon une quelconque des revendications 1 à 4, **caractérisé en ce que** la partie inférieure (4) et les parties couvercles (8, 11) sont des plaques identiques dans lesquelles un angle de 120° divise la plaque en deux parties égales, de sorte que le carter de protection présente la forme d'un hexagone équilatéral.
